(19) **Europäisches Patentamt / European Patent Office / Office européen des brevets**

(11) **EP 1 650 680 B1**

(12) **EUROPEAN PATENT SPECIFICATION**

(45) Date of publication and mention
of the grant of the patent:
**23.12.2009 Bulletin 2009/52**

(51) Int Cl.:
***G06F 17/30*** *(2006.01)*

(21) Application number: **05256262.6**

(22) Date of filing: **06.10.2005**

(54) **Device, method, processor arrangement and computer-readable medium storing program for document classification**

Vorrichtung, Verfahren, Prozessoranordnung und computerlesbares Datenträgerspeicherprogramm zur Dokumentklassifizierung

Dispositif, procédé, arrangement de processeur et support lisible par ordinateur pour le stockage d'un programme de classification de documents

(84) Designated Contracting States:
**DE FR GB**

(30) Priority: **13.10.2004 JP 2004299229**

(43) Date of publication of application:
**26.04.2006 Bulletin 2006/17**

(73) Proprietor: **HEWLETT-PACKARD DEVELOPMENT COMPANY, L.P.**
**Houston, TX 77070 (US)**

(72) Inventor: **Odai, Hiromi c/o Hewlett-Packard Japan, Ltd**
**Tokyo (JP)**

(74) Representative: **Exell, Jonathan Mark et al**
**Williams Powell**
**Staple Court**
**11 Staple Inn Buildings**
**London**
**WC1V 7QH (GB)**

(56) References cited:
**EP-A- 1 429 258       WO-A-03/042859**

• **LAWSON A D: "Automatic entity extraction and activity detection for aerospace communications" AEROSPACE CONFERENCE, 2004. PROCEEDINGS. 2004 IEEE BIG SKY, MT, USA 6-13 MARCH 2004, PISCATAWAY, NJ, USA, IEEE, US, 6 March 2004 (2004-03-06), pages 3098-3109Vol5, XP010747910 ISBN: 0-7803-8155-6**

• **ALEX COLLIER, MIKE PACEY, ANTOINETTE RENOUF: "Refining the Automatic Identification of Conceptual Relations in Large-scale Corpora"[Online] 1998, pages 76-84, XP002433044 Retrieved from the Internet: URL: http://citeseer.ist.psu.edu/cache/pape rs/cs/27686/http:zSzzSzacl.ldc.upenn.eduzS zWzSzW98zSzW98-1109.pdf/collier98refining. pdf> [retrieved on 2007-05-10]**

• **KUSHAL DAVE, STEVE LAWRENCE, DAVID M. PENNOCK: "Mining the peanut gallery: opinion extraction and semantic classification of product reviews" PROCEEDINGS OF THE 12TH INTERNATIONAL CONFERENCE ON WORLD WIDE WEB, [Online] 24 May 2003 (2003-05-24), pages 519-528, XP002433042 Budapest Retrieved from the Internet: URL:http://portal.acm.org/citation.cfm?id= 775152.775226> [retrieved on 2007-05-10]**

• **J. WIEBE AND T. WILSON AND M. BELL: "Identifying collocations for recognizing opinions" PROCEEDINGS OF ACL/EACL 2001 WORKSHOP ON COLLOCATION, [Online] July 2001 (2001-07), XP002433043 France Retrieved from the Internet: URL:http://citeseer.ist.psu.edu/cache/pape rs/cs/22078/http:zSzzSzwww.cs.pitt.eduzSz~wiebezSzpubszSzpaperszSzacl01wkshop.pdf/wi ebe01identifying.pdf> [retrieved on 2007-05-10]**

**Description**

**RELATED APPLICATIONS**

The present application is based on, and claims priority from, Japanese Application Number 2004-299229, filed October 13, 2004.

**TECHNICAL FIELD**

The disclosure relates to a method, a device, a processor arrangement and a computer-readable medium storing program for classifying documents.

**BACKGROUND**

There are known methods used to roughly classify documents including opinions on various goods and services into two categories. Examples include

- JP 2003-157271 A, Device and method for mining text;
- JP 2003-271616 A, Document classification device, document classification method and recording medium;
- Inui, Matsumoto (2004), "Acquiring lexical knowledge for event desirability analysis", Proceedings of the 10th Annual Meeting of the Association for Natural Language Processing, pp. 91-94;
- Yuji Ide, Hidetoshi Nagai, Teigo Nakamura, and Hirosato Nomura "Information Extraction with Single Item Template from Newspaper Articles", Information Processing Society of Japan, Vol. 97, No. 109, 1997;
- Makoto Fujiyoshi, Yuji Ide, Hidetoshi Nagai, Teigo Nakamura, and Hirosato Nomura "Creation of Templates for Information Extraction Processing", Proceedings from the 1996 Kyushu Joint Conference of Electrical and Electronics Engineers, No. 1332, p694, 1996;
- Aronow, Soderland, & Feng, 1994. Automated Classification of Encounter Notes In A Computer Based Medical Record, unpublished (http://citeseer.ist.psu.edu/aronow94automated.html);
- Kantor, Lee, Ng & Zhao, 1996. Application of Logical Analysis of Data to the TREC6 Routing Task. Text {REtrieval} Conference Proceedings, 611-617, 1997;
- Dumais, S. T., Furnas, G. W.,Landauer, T.K., & Deerwester, S. (1988). Using latent semantic analysis to improve information retrieval. In CHI'88: Conference on Human Factors in Computing, (pp. 281-285). New York: ACM; and
- P.D. Turney, 2002, Thumbs Up or Thumbs Down? Semantic Orientation Applied to Unsupervised Classification of Reviews. Proceeding of the 40th Annual Meeting of the Association for Computational Linguistics. Philadelphia, Pennsylvania, U.S.A. (pp. 417-424).

JP 2003-157271 A, JP 2003-271616 A, Inui, Matsumoto (2004) and P.D. Turney (2002) disclose several methods used to extract an intention of a writer by means of pattern matching with prepared expression dictionaries and the like. In these methods, expressions used to extract writers' intentions are prepared in advance, and calculations such as weighting are carried out based upon the determination whether the prepared expressions are included in the writings or not.

Inoue et al. (1997), Yuji et al. (1997), and Makoto Fujiyoshi et al (1996) disclose methods which use templates to acquire necessary information from documents. Inoue et al. (1997) propose a template used to determine whether an article contains information on a specific product or not. In accordance with Inoue at al. (1997), it is possible to determine whether a certain document includes information that matches a specific pattern. This method is applicable to achieve the object of classifying documents into two categories.

Methods using decision tree can be found in publications such as Aronow and et al. (1994) and Kantor et al. (1997). In a system for determining whether a description matches a certain medical symptom, a method of decision tree is used to calculate the matching probability. In addition to the above discussed method of JP 2003-157271 A, JP 2003-271616 A, Inui, Matsumoto (2004) and P.D. Turney (2002). The method of Arnow et al. (1994) provides an accuracy level of about 80%.

The document "Automatic entity extraction and activity detection for aerospace communications" by Lawson A D, ISBN 0-7803-8155-6 pages 3098-3109 discusses training of an information extraction system. The document "Mining the peanut gallery: opinion extraction and semantic classification of product reviews" by Kushal Dave et al, proceeding of the 12th international conference on world wide web, 24 May 2003, pages 519-528 discusses a classifier for use in opinion mining.

SUMMARY

In accordance with an embodiment, there is provided a method according to claim 1.

In accordance with an embodiment, there is provided a system according to claim 5.

In accordance with an embodiment, a computer program or a processor arrangement Is provided for performing the immediately described method.

The objects, features and advantages of the present invention will become apparent upon consideration of the -following detailed description of the specific embodiments thereof, especially when taken in connection with the accompanying drawings.

BRIEF DESCRIPTION OF THE DRAWINGS

The embodiments of the present invention are illustrated by way of example, and not by limitation, In the figures of the accompanying drawings, wherein elements having the same reference numeral designations represent like elements throughout in which:

> FIG. 1 is a high-level block diagram of an exemplary device with which embodiments of the present invention can be implemented;
> FIG. 2 is a block diagram showing an embodiment of the present invention; and
> FIG. 3 is a flowchart illustrating the processes performed in accordance with an embodiment of the present invention.

**DETAILED DESCRIPTION OF EMBODIMENTS**

Before the embodiments of the invention are explained in detail, it is to be understood that the invention is not limited in its application to the details of construction and the arrangements of components set forth in the following description or illustrated in the drawing. The invention is capable of other embodiments and of being practiced or being carried out in various ways. Also, it is understood that the phraseology and terminology used herein are for the purpose of description and should not be regarded as limitirig. The use of letters to identify steps of a method or process is simply for identification and is not meant to indicate that the steps should be performed in a particular order.

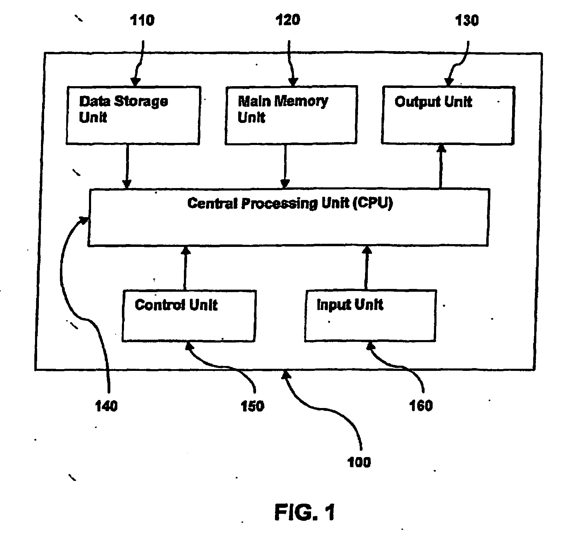

FIG. 1 is a high-level block diagram of an exemplary device 100 with which embodiments of the present invention can be implemented. Device 100 includes a data storage unit 110, a main memory 120, an output unit 130, a central processing unit (CPU) 140, a control unit 150, and an input unit 160. A user inputs necessary information from the control unit 150. The central processing unit 140 reads out information stored in the data storage unit 110, classifies a document inputted from the input unit 160 based upon the read information, and outputs a result to the output unit 130. However, other arrangements are not excluded. For example, any of the document to be classified, the information used for classifying the document and the necessary information can be inputted by the user via the control unit 150 and/or stored in the data storage unit 110 and/or inputted from the input unit 160. Device 100 in accordance with an embodiment can be a computer system.

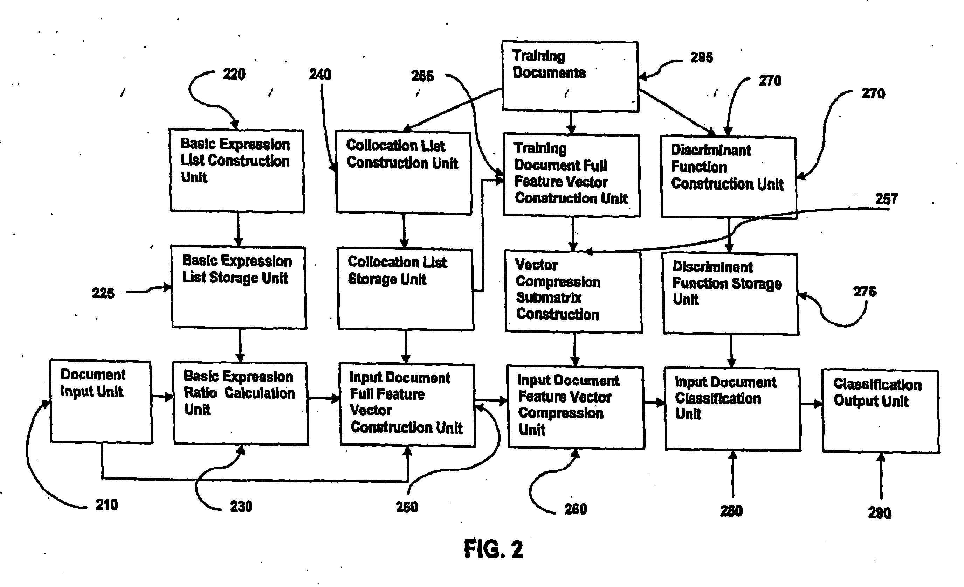

FIG. 2 is a block diagram showing an embodiment of the present invention which can be implemented in form of, e.g., software instructions that are contained in a cornputer-readable medium and, when executed by, e.g., device 100, cause the CPU 140 to perform a process of classifying documents. In alternative embodiments, hard-wired circuitry may be used in place of or in combination with software instructions to perform the process. Thus, embodiments of the invention are not limited to any specific combination of hardware circuitry and software.

In FIG. 2 denotes reference numeral 210 denotes a document input unit; reference numeral 220 denotes a basic expression list construction unit; reference numeral 225 denotes a basic expression list storage unit; reference numeral 230 denotes a basic expression ratio calculation unit; reference numeral 240 denotes a collocation list construction unit; reference numeral 245 denotes a collocation list storage unit; reference numeral 250 denotes an input document full feature vector construction unit; reference numeral 255 denotes a training document full feature vector construction unit; reference numeral 257 denotes a vector compression submatrix construction unit; reference numeral 260 denotes an input document full feature vector compression unit; reference numeral 270 denotes a discriminant construction unit; reference numeral 275 denotes a discriminant storage unit; reference numeral 280 denotes an input document classification unit; and reference numeral 290 denotes a classified document output unit. A detailed description of the embodiment illustrated in FIG. 2 will be given below.

(1) Document Input Unit 210

The document input unit 210 is arranged as an input for a document to be classified.

(2) Basic Expression List Construction Unit 220

The basic expression list construction unit 220 is arranged to construct basic expression lists from expressions within general documents. Each of the basic expression lists includes words and expressions having connotations related to the same category. Different basic expression lists include words and expressions having connotations related to different categories. The basic expression lists may be constructed based on semantic orientations of the words and expressions. For example, in the case of two categories: negative and positive, words and expressions such as "luxurious," "gorgeous," "soft," "smooth," and "first in" have a positive semantic orientation, whereas words and expressions such as "not enough," "lacking in," "questionable" and "unfortunately" show a negative semantic orientation. These semantic orientations are generally referred to as connotations, and the terms "positive connotation" and "negative connotation" are herein used as positive and negative semantic orientations, respectively. Words and expressions having positive and negative connotations are categorized into a positive expression list and a negative expression list, respectively, as the basic expression lists constructed by the basic expression list construction unit 220. (3) Basic-Expression List Storage Unit 225

The basic expression list storage unit 225 is arranged to store the basic expression lists constructed by the basic expression list construction unit 220.

(4) Basic Expression Ratio Calculation Unit 230

The basic expression ratio calculation unit 230 is arranged to calculate a value associated with the number of appearances of words and expressions, that belong to one of the basic expression lists, in an input document to be classified. For example, the basic expression ratio calculation unit 230 calculates a positive expression ratio and a negative expression ratio from the input document to be classified using the basic expression lists stored in the basic expression list storage unit 225. The positive expression ratio and the negative expression ratio are defined as follows:

(Equation 1) Positive expression ratio =

Total number of positive expressions within document/

Number of content words within document

(Equation 2) Negative expression ratio =

Total number of negative expressions within document/

Number of content words within document

The term "content word" herein refers to a word which represents a certain concept, and can independently construct a phrase in a sentence. Content words include nouns, pronouns, verbs, adjectives, adjectival nouns, adnominals, adverbs, conjunctions, and interjections.

The positive expression ratio and negative expression ratio may be used as optional elements of an expanded "input document feature vector " that will be described herein below.

(5) Collocation List Construction Unit 240

The collocation list construction unit 240 is arranged to construct a collocation list that will be described below.

(a) Definitions

The term "bound form" is used herein to denote, among components of a language, a component which does not occur independently, always plays an auxiliary role for other components, and includes the following parts of speech: case-marking particles, sentence-final particles, auxiliary verbs, prefixes, postfixes, and the like. Although bound forms themselves may not directly and/or explicitly have positive or negative connotations, whether they are positive or negative in semantic orientation can be determined in relation with other accompanying words.

The term "collocation" is defined as a sequence of words, such as bound forms, which often co-occur together and form a common expression. A collocation may consist of bound forms, may include in addition to one or more bound forms a word or words other than bound forms, or may consist of one or more non-bound-form words. Commonly co-occurring words appearing in a certain pattern have a connection stronger than would be expected by chance, and have together a specific meaning or a specific function. Idioms can be considered as examples of collocations that have especially strong connections. A collocation may have its component words arranged successively, or may include another, intervening word or words between the component words. Expressions with known collocation component words with one, two, or more such intervening words in between are considered as collocation candidates.

Collocations and/or collocation candidates can be extracted from a given document. In case a large number of collocations and/or collocation candidates are extracted from the document, only those collocations and/or collocation candidates which are statistically suitable for document classification will be selected as "collocation features" of the given document.

(b) Examples

First, consider the following exemplary expressions from the Japanese language.

(i)"Sore ha yoi teian **de** aru"
(ii) "Sore ha yoi teian **dewa** aru"

Although the only difference between (i) and (ii) is that of "de" and "dewa," the latter dramatically changes an overall connotation of the statement (ii) toward a negative direction. Since it cannot be said that the topic-marker "wa" alone imparts the negative connotation, it is thus considered that the negative connotation is generated by the sequence of "de" and "wa."

Similarly, consider the following exemplary expressions from the English language.

(iii) "This is a killer application."
(iv) "This could have been a killer application."

Although the only difference between (iii) and (iv) is that of "is" and "could have been", expression (iv) conveys such a nuance that the speaker thinks that the product right now is not "a killer application." Each of the component words "could," "have" and "been" individually does not have any negative connotation. The negative connotation of expression (iv) is a result of the sequence of the component words.

In this way, a connotation, which is not represented by individual bound forms or non-bound-form words, can be generated in a sequence of such bound forms and non-bound-form words. By detecting, in a given document, the presence of one or more collocations and/or collocation candidates including a connotation implying positive or negative contents, it can be determined in accordance with the embodiments of the present invention whether there is a semantic orientation toward the positive or negative direction in the given document.

According to an embodiment of the present invention, documents in Japanese are classified by detecting a sufficiently large number of collocations and collocation candidates including bound forms such as "- [to] [mo] - (ieru), - [ka] [mo] - [nai]", or "[how] [could]... [be] (true), [too](good) [to] [be]..." to give possible English examples. (c) Extraction of Collocation Features from Training Documents.

The following operations are carried out for positive and negative training documents, commonly denoted in FIG. 2 at 295. The term "training document" herein implies a document whose contents have been examined in advance, and the classification of the document as either a positive or a negative document has been known in advance. The term "*N*-gram" is used herein to refer to a collocation of N consecutive words. An *N*-gram containing one word is referred to as a Uni-gram; two words, as a Bi-gram; and three words, as a Tri-gram. The term "skip *N*-gram" is used herein to denote collocation candidates with a predetermined interval or number of intervening words. For example, Bi-grams having intervals of one, two, and three words are respectively denoted as 2-1gram, 2-2gram, and 2-3gram. In an embodiment, (i) only bound forms are extracted from the training documents, and selected bound forms are then concatenated into a single string or *N*-gram, and (ii) all skip *N*-grams in the form of 2-1, 2-2, and 2-3grams are extracted, and (iii) the extracted *N*-grams and skip *N*-grams are sorted, and used as collocation features of the training sentences of the training documents 295. In another embodiment, known collocations (*N*-grams) and/or skip *N*-grams based on the known *N*-grams are extracted; and the extracted N-grams and/or skip N-grams are sorted and used for subsequent selection of collocation features of the training documents 295.

(d) Statistical Processing

If all the extracted *N*-gram and skip *N*-grams collocations are simply designated as collocation features, several thousands of such collocation features will be obtained even though not all of them are necessarily suitable for document classification. Thus, the negative documents and positive documents from the training documents 295 are compared, e.g., using a Z-test that will be described herein below, to select collocation features which show a semantic orientation toward either the positive or the negative direction. Proportions of the collocation features respectively appearing in the two sets of documents are compared, and a process can be used to statistically analyze the proportions.

Such a process, i.e., an equality process, will be described herein below. It is assumed that a certain word or expression W appears in both document sets d1 and d2, and the respective numbers of appearance of W in the document sets are denoted as w1 and w2, respectively. It is also assumed that the total numbers of content words in the document sets d1 and d2 are n1 and n2, respectively. The proportions of appearance of W in, the respective document sets d1 and d2 are respectively represented as:

$$\text{(Equation 3) } p1 = w1/n1,$$

and

$$\text{(Equation 4) } p2 = w2/n2$$

Assuming that the proportions obtained from the actual data are called sample proportions, p1 and p2 are sample proportions in the present analysis. If p1 > p2, it is now necessary to verify whether this relationship is significant or not, namely, it is required to verify whether W occurs significantly more frequently in the document set d1 than in the document set d1 or not. This is an one-side test.

A null hypothesis and an alternative hypothesis are, respectively, represented as:

$$\text{H0: pi1 = pi2}$$

$$\text{H1: pi1 > pi2}$$

In order to verify the significance of the relationship p1 > p2, a population proportion pihat (Equation 5), which is not actually known, is first estimated from the sample proportions.

$$\text{(Equation 5) pihat = (n1 * p1 + n2 * p2)/(n1 + n2)}$$

Based upon this equation, z is calculated by (Equation 6):

$$\text{(Equation 6) } z = (p1 - p2)/\text{sqrt(pihat*(1 - pihat) * (1/n1 + 1/n2))}$$

In order to reject the null hypothesis, and to accept the alternative hypothesis, it is required that z > 1.65 at the significance level of 5%.

In this way, the extracted respective *N*-gram collocations are analyzed to find out the *N*-gram collocations which appear more significantly in the positive sentences, and the *N*-gram collocations which appear more significantly in the negative sentences of the training documents 295. These frequently appearing collocations are subsequently designated as collocation features of the training documents 295.

(6) Collocation List Storage Unit 245

The collocation list storage unit 245 is arranged to store the skip *N*-gram collocation features selected by the collocation list storage unit 240. According to an embodiment, the number of the collocation features which are obtained from the training documents 295 and are stored in the collocation list storage unit 245 may be as high as several hundred, and such collocation features will define a vector with several hundred dimensions, as will be described hereinafter.

(7) Input Document Full Feature Vector Construction Unit 250

For an input document to be classified, based upon the collocation features stored in the collocation list storage unit 245, the numbers of appearance of the individual collocation features in the input document are calculated. As a result, several hundred values will be obtained, each for one of the several hundred collocation features stored in the collocation list storage unit 245. The input document can now be represented by an "input document full feature vector" having the several hundred calculated values as its elements. Thus, the "input document full feature vector" will have several hundred dimensions in this particular embodiment.

(8) Training Document Full Feature Vector Construction Unit 255

Since it is difficult and/or undesirable and/or unnecessary to analyze the "input document full feature vector" having a large number, e.g., several hundred, of dimensions, a preparation is carried out to reduce the number of dimensions of the "input document full feature vector." For this purpose, as described above in the section (7), based upon the collocation features stored in the collocation list storage unit 240, a "training document full feature vector" is constructed in the training document full feature vector construction unit 255, by detecting the numbers of appearances of the collocation features in the training documents 295. In an embodiment, one of the training document full feature vector construction unit 255 and the input document full feature vector construction unit 250 is omitted and its function is performed by the other.

(9) Vector Compression Submatrix Construction Unit 257

To reduce the number of dimensions of a document full feature vector, various methods can be used. In an embodiment, the method of singular-value decomposition is used. According to this method, if an original vector has a large number of elements many of which have a zero value, it is possible to convert the original vector into a vector which has fewer dimensions yet retains overall characteristics of the original vector.
A description of the method of singular-value decomposition will be given below.
A decomposition of a matrix A of (m x n) into three matrices as shown below is referred to as the singular-value decomposition.

$$\text{(Equation 7)} \quad A = D \times S \times T'$$

where D denotes a matrix of (m x n), S denotes a matrix of (n x n) wherein the singular values are arranged as the diagonal elements in the descending order from the top left corner to the bottom right corner, and T denotes a matrix of (n x n). "T′" denotes a transposed matrix of the matrix "T". D and T are orthogonal matrices whose respective columns have the orthogonal relationship. If r (r <= n) largest singular values are selected from the singular values of S to generate a submatrix Sr of (r x r), a submatrix of (m x r) is obtained as Dr from the matrix D, and a submatrix of (r x n) is obtained as Tr' from the matrix T', then an approximated matrix A-hat can be obtained as follows

$$\text{(Equation 8)} \quad A\text{-hat} = Dr \times Sr \times Tr'$$

The approximated matrix A-hat corresponds to rank r of the matrix A. In accordance with Latent Semantic Indexing (see, e..g., the above cited Dumais et al., 1988), if the original matrix A is a matrix having information corresponding to m documents and n terms, then Dr represents a new arrangement of the documents in r dimensions, and Tr represents a new arrangement of the terms in r dimensions, which is a representation of important characteristics extracted from matrix A. Moreover, the representation of the terms by Tr reflects indirect co-occurrence relationships among the terms.
A description of the indirect co-occurrence relationship will now be given. As an example, the following distribution of three terms t1 to t3 within two documents D1 and D2 is considered.

|      | t1 | t2 | t3 |
|------|----|----|----|
| D1   | 1  | 1  |    |
| D2   |    | 1  | 1  |

As shown above, even if there are no documents where t1 and t3 actually co-occur, if there are enough number of documents where t1 and t2 co-occur and t2 and t3 co-occur, it can be said that there is an indirect co-occurrence relationship between t1 and t3 by way of t2. Latent Semantic Indexing makes it possible to extract an arrangement in which the terms t1 and t3 described above are placed in the vicinity of each other.

As a result, according to this method, the representation of the terms in n dimensions is reduced to the representation in r dimensions. Moreover, a preferable characteristic of the above-mentioned indirect co-occurrence relationship can also be reflected in the dimension-reduced representation, as described in the above cited Dumais et al., 1988.

According to this embodiment, (Equation 8) is transformed to obtain (Equation 9).

$$\textbf{(Equation 9) } \textbf{Dr = A-hat x Inv(Sr x Tr'),}$$

where Inv(Sr x Tr') denotes an inverse matrix of (Sr x Tr'). (Sr x Tr' ) is first obtained from (i) the submatrix Sr of (r x r) and (ii) the submatrix Tr' of (r x n) obtained from the training documents 295, and then the inverse matrix Inv(Sr x Tr') is obtained. Inv(Sr x Tr') is a vector compression submatrix obtained from the training documents 295 by the vector compression submatrix construction unit 257. (10) Input Document Feature Vector Compression Unit 260

According to the above cited Dumais et al., 1988, A-hat is a matrix of (m x n) containing the information related to m documents and n terms. According to an embodiment, it can be considered that the documents are inputted one by one. Thus, m=1, and A-hat is a matrix of (1 x n). Similarly, it can be considered that Dr is a matrix of (1 x r). Therefore, according to this embodiment, A-hat is the "input document full feature vector", and Dr is a compressed "input document feature vector".

In the input document feature vector compression unit 260, Dr is obtained from (i) the vector compression submatrix Inv (Sr x Tr') obtained from the training documents by the vector compression submatrix construction unit 257, and (ii) A-hat obtained from the input document according to (Equation 9). As a result, it is possible to obtain the compressed input, document feature vector "Dr" with r dimensions (15 dimensions in this embodiment) reduced from n dimensions (several hundreds dimensions in this embodiment) of the input document full feature vector "A-hat". (11) Discriminant Construction Unit 270

In the discriminant construction unit 270, a discriminant function used to classify the input document is obtained. According to an embodiment, in order to increase the accuracy of the discriminant function, machine learning is carried out to learn at least a classification criterion for the discriminant function based upon the training documents 295. In an embodiment, Support Vector Machine is used as a method of machine learning. That is, Support Vector Machine learns the classification criterion based on the "training document full feature vectors" obtained from the training documents, which were classified into, e.g., two categories, such as positive and negative categories, in advance. Support Vector Machine developed by V. Vapnik and others is a machine learning mechanism that has a high generalization ability and it is designed basically for classification into two classes, thus it is suitably applicable to the problem concerned in this embodiment. It is known that Support Vector Machine learns fast and stably by means of a method which maximizes the distance (margin) from a hyper plane serving as a determination criterion to the data points which are used as decision criteria (= support vectors).

(12) Discriminant Storage Unit 275

The discriminant function whose classification accuracy is enhanced by the machine learning method of the discriminant construction unit 270 is stored in the discriminant storage unit 275. (13) Document Classification Unit 280

In an embodiment, an expanded "input document feature vector" with 17 dimensions is created based upon (i) the compressed input document feature vector with, e.g., 15 dimensions provided by the input document feature vector compression unit 260, and (ii) the positive expression ratio and the negative expression ratio obtained according to (Equation 1) and (Equation 2) by the basic expression ratio calculation unit 230. The input document is classified by the document classification unit 280 using the expanded input document feature vector according to the discriminant function stored in the discriminant storage unit 275. In another embodiment, the compressed input document feature vector is directly used for classifying the input document without taking account of the positive and the negative expression ratios.

(14) Classification Output Unit 290

The classification result is outputted from the classification output unit 290 which, in an embodiment, is the output unit 130 shown in FIG. 1.

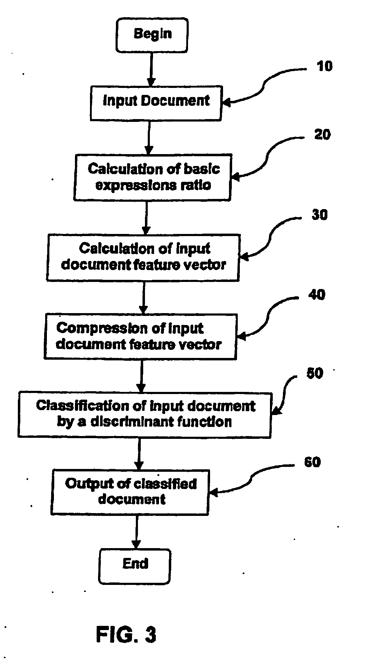

FIG. 3 is a flowchart illustrating an algorithm for classifying an input document according to an embodiment of the present invention.

At Step 10, a document to be classified is inputted.

**[0056]** , At Step 20, the positive expression ratio and negative expression ratio are calculated according to (Equation 1) and (Equation 2) described above.

At Step 30, an input document full feature vector is constructed. For the input document, based upon the collocation features stored in the collocation list storage unit 240, the numbers of appearance of the individual collocation features in the input document are determined and are represented as elements of an input document full feature vector.

At Step 40, the input document full feature vector is compressed as described above. According to an embodiment, the number of dimensions of the input document full feature vector is reduced, e.g., from several hundred to 15.

At Step 50, the input document is classified by a discriminant function and based on the compressed input document feature vector as described above. In an embodiment the positive expression ratio and the negative expression ratio obtained at Step 20 are added to the compressed input document feature vector to obtain an expanded input document feature vector which will then be used for classification using the discriminant function. In another embodiment, the compressed input document feature vector is directly used for classification.

At Step 60, the classification of the input document is outputted.

According to the disclosed embodiments, documents are classified into a number, e.g., two, mutually excluding categories, such as documents with the positive tendency, and documents with the negative contents with an approximate overall accuracy of 83%.

The disclosed embodiments provide the following advantages.

(1) If there are a large number of groups of documents including opinions on various goods and/or services and/or other objects, it is possible to determine with significant accuracy whether the opinions included in the documents are negative or positive.

(2) Directly, if there are a large number of comments by consumers on a certain product, it is possible to recognize a trend of such comments, and to use the trend to complement information obtained by, e.g., a survey via questionnaires. Moreover, for the purpose of administration of an electronic bulletin board and the like, excessively negative or derogatory postings may lead the bulletin board community toward the wrong direction, or may impair the generally healthy atmosphere within the bulletin board. The disclosed embodiments allow the administrator to efficiently administrate the electronic bulletin board by attaching a flag to such a posting, and warning the administrator of the presence of the flag/negative posting.

(3) Indirectly, by using the disclosed embodiments for the purposes of preprocessing, it is possible to add semantic information indicating a positive context or a negative context to the documents to be classified. For example, if a large number of documents including value judgments are to be classified according to topics by means of clustering, by carrying out the clustering after roughly classifying the documents into documents with a positive tendency and documents with a negative tendency, the documents can be classified to the topics more accurately. When a semantic structure of a sentence is being analyzed, e.g., by means of a framework such as FrameNet, if there is available information on whether the sentence in question is in a positive context or negative context, such information can serve to increase the accuracy of classification of the sentence as, e.g., either "praise" or "blame". By pre-classifying documents into documents with a positive tendency and documents with a negative tendency in advance, that the subsequent main classification process can be simplified and the classification accuracy can be improved.

(4) The disclosed embodiments can be applied to documents from wide varieties of fields, without liming the documents to be classified to specific fields/areas, by focusing upon expressions and words which appear in almost any types of documents.

(5) A disclosed embodiment is advantageously applicable to Japanese, utilizing collocations including negative and/or positive connotations in the form of *N*-grams including bound forms such as "- to mo- (ieru), ka mo - nai."

While there have been described and illustrated specific embodiments of the invention, it will be clear that variations on the details of the embodiment specifically illustrated and described may be made without specifically departing from the scope of the invention as defined in the appended claims.

**EP 1 650 680 B1**

## Claims

1. A document classification method, comprising
extracting feature vectors from input documents by referring to a dictionary, and classifiing the input documents into positive documents and negative documents by discriminant,
**characterised in that** the dictionary includes, a list of positive collocation of bound-form words extracted from positive training documents, and a list of negative collocation of bound-form words extracted from negative training documents;
the method comprising:

   (a) calculating the frequency of a positive collocation of bound-form words from the input documents by referring to a list of positive collocation of bound-form words;
   (b) calculating the frequency of a negative collocation of bound-form words from the input documents by referring to a list of negative collocation of bound-form words;
   (c) creating the feature vector based on the frequency of a positive collocation of bound-form words and the frequency of a negative collocation of bound-form words;
   (d) classifying the input documents into positive documents and negative documents with the created feature vector by the discriminant.

2. The method claimed in claim 1, further including;
creating a compressed feature vector by compressing the feature vector;
classifying the input documents into positive documents and negative documents with the compressed feature vector by discriminant.

3. The method claimed in claim 1 or 2, wherein the dictionary includes, a list of positive expression extracted from positive training documents, a list of negative expression extracted from negative training documents, and a list of content words; further including:

   extracting a set of positive expression by referring a list of positive collocation, and a number of content words by referring a list of content words, from the input document, to calculate positive expression ratio with the set of positive expression and the number of content words;
   extracting a set of negative expression by referring is list of negative collocation from the input document, to calculate negative expression ratio with the set of negative expression and the number of content words;
   classifying into the positive documents and the negative documents with the feature vector including the positive expression ratio and the negative expression ratio

4. The method claimed in claim 1, 2, or 3, wherein each of the collocations is a consecutive N-gram or a skip N-gram including at least one intervening word in a middle of the N-grams.

5. A system comprising means for performing the steps of any preceding claim.

6. A computer program comprising computer program code means for performing all of the steps of any of claims 1 to 4 when said program is run on a computer.

7. A computer program as claimed in claim 6 embodied on a computer readable medium.

## Patentansprüche

1. Ein Dokumentenklassifizierungsverfahren, das folgende Schritte aufweist:

   Extrahieren von Merkmalsvektoren aus Eingangsdokumenten durch Bezugnahme auf ein Verzeichnis und Klassifizieren der Eingangsdokumente in positive Dokumente und negative Dokumente nach Diskriminante, **dadurch gekennzeichnet,**
   **dass** das Verzeichnis eine Positiv-Kollokationsliste aus
   Bindeformwörtern, extrahiert aus positiven Trainingsdokumenten, und eine Negativ-Kollokationsliste aus Bindeformwörtern, extrahiert aus negativen Trainingsdokumenten, umfasst;
   wobei das Verfahren folgende Schritte aufweist:

(a) Berechnen der Frequenz einer positiven Kollokation von Bindeformwörtern aus den Eingangsdokumenten durch Bezugnahme auf eine Positiv-Kollokationsliste von Bindeformwörtern;

(b) Berechnen der Frequenz einer negativen Kollokation von Bindeformwörtern aus den Eingangsdokumenten durch Bezugnahme auf eine Negativ-Kollokationsliste von Bindeformwörtern;

(c) Erzeugen des Merkmalsvektors basierend auf der Frequenz einer positiven Kollokation von Bindeformwörtern und der Frequenz einer negativen Kollokation von Bindeformwörtern;

(d) Klassifizieren der Eingangsdokumente in positive Dokumente und negative

Dokumente mit dem erzeugten Merkmalsvektor durch die Diskriminante.

2. Das Verfahren gemäß Anspruch 1, das ferner Folgendes umfasst:

Erzeugen eines komprimierten Merkmalsvektors durch Komprimieren des Merkmalsvektors;
Klassifizieren der Eingangsdokumente in positive Dokumente und negative Dokumente mit dem komprimierten Merkmalsvektor durch eine Diskriminante.

3. Das Verfahren gemäß Anspruch 1 oder 2, bei dem das Verzeichnis eine Liste aus positiven Ausdrücken extrahiert aus positiven Trainingsdokumenten, eine Liste aus negativen Ausdrücken extrahiert aus negativen Trainingsdokumenten und eine Liste aus Inhaltswörtern umfasst; wobei das Verfahren ferner Folgendes umfasst:

Extrahieren eines Satzes aus positiven Ausdrücken durch Bezugnahme auf eine Positiv-Kollokationsliste und einer Anzahl von Inhaltswörtern durch Bezugnahme auf eine Liste aus Inhaltswörtern aus dem Eingangsdokument, um das Verhältnis der positiven Ausdrücke mit dem Satz aus positiven Ausdrücken und der Anzahl aus Inhaltswörtern zu berechnen;
Extrahieren eines Satzes aus negativen Ausdrücken durch Bezugnahme auf eine Negativ-Kollokationsliste aus dem Eingangsdokument, um das Verhältnis negativer Ausdrücke mit dem Satz aus negativen Ausdrücken und der Anzahl von Inhaltswörtern zu berechnen;
Klassifizieren in die positiven Dokumente und die negativen Dokumente mit dem Merkmalsvektor, der das Positiv-Ausdruck-Verhältnis und Negativ-Ausdruck-Verhältnis umfasst.

4. Das Verfahren gemäß Anspruch 1, 2 oder 3, bei dem jede der Kollokationen ein fort laufendes N-Gramm oder ein springendes N-Gramm ist, das zumindest ein dazwischentretendes Wort in der Mitte der N-Gramme umfasst.

5. Ein System, das eine Einrichtung aufweist zum Ausführen der Schritte von jedem der vorangehenden Ansprüche.

6. Ein Computerprogramm, das eine Computerprogrammcodeeinrichtung aufweist zum Ausführen aller Schritte gemäß einem der Ansprüche 1 bis 4, wenn das Programm auf einem Computer ausgeführt wird.

7. Ein Computerprogramm gemäß Anspruch 6, das auf einem computerlesbaren Medium verkörpert ist.

**Revendications**

1. Méthode de classification de documents, comprenant l'extraction de vecteurs caractéristiques de documents d'entrée en faisant référence à un dictionnaire, et la classification des documents d'entrée en documents positifs et en documents négatifs par un discriminant,
**caractérisé en ce que** le dictionnaire comprend une liste de collocations positives de mots de forme liée extraits de documents de formation positifs, et une liste de collocations négatives de mots de forme liée extraits de documents de formation négatifs ;
le procédé comprenant :

(a) le calcul de la fréquence d'une collocation positive de mots de forme liée à partir des documents d'entrée en faisant référence à une liste de collocations positives de mots de forme liée ;
(b) le calcul de la fréquence d'une collocation négative de mots de forme liée à partir des documents d'entrée en faisant référence à une liste de collocations négatives de mots de forme liée ;
(c) la création du vecteur caractéristique sur la base de la fréquence d'une collocation positive de mots de forme liée et de la fréquence d'une collocation négative de mots de forme liée ;
(d) la classification des documents d'entrée en documents positifs et documents négatifs avec le vecteur caractéristique créé par le discriminant.

2. Méthode selon la revendication 1, comprenant en outre :

  ✦ la création d'un vecteur caractéristique compressé en compressant le vecteur caractéristique ;

  ✦ la classification des documents d'entrée en documents positifs et documents négatifs avec le vecteur caractéristique compressé par le discriminant.

3. Méthode selon la revendication 1 ou 2, dans lequel le dictionnaire comprend une liste d'expressions positives extraites de documents de formation positifs, une liste d'expressions négatives extraites de documents de formation négatifs, et une liste de mots de contenu ; comprenant en outre :

  ✦ l'extraction d'un ensemble d'expressions positives en faisant référence à une liste de collocations positives, et d'un nombre de mots de contenu en faisant référence à une liste de mots de contenu à partir du document d'entrée, pour calculer le taux d'expressions positives avec l'ensemble d'expressions positives et le nombre de mots de contenu ;

  ✦ l'extraction d'un ensemble d'expressions négatives en faisant référence à une liste de collocations négatives à partir du document d'entrée, pour calculer le taux d'expressions négatives avec l'ensemble d'expressions négatives et le nombre de mots de contenu ;

  ✦ la classification en documents positifs et documents négatifs avec le vecteur caractéristique comprenant le taux d'expressions positives et le taux d'expressions négatives.

4. Méthode selon la revendication 1, 2 ou 3, dans lequel chacune des collocations est un N-gram consécutif ou un N-gram de saut comprenant au moins un mot d'intervenant au milieu des N-grams.

5. Système comprenant des moyens pour effectuer les étapes des revendications précédentes.

6. Programme informatique comprenant des moyens de code de programme informatique pour effectuer toutes les étapes des revendications 1 à 4 lorsque ledit programme est exécuté sur un ordinateur.

7. Programme informatique selon la revendication 6 mis en oeuvre sur un support lisible par ordinateur.

110            120            130

```
┌──────────────────────────────────────────────────────────────┐
│                                                                │
│  ┌──────────────┐   ┌──────────────┐   ┌──────────────┐        │
│  │ Data Storage │   │ Main Memory  │   │ Output Unit  │        │
│  │ Unit         │   │ Unit         │   │              │        │
│  └──────────────┘   └──────────────┘   └──────────────┘        │
│         │                  │                  ▲                 │
│         ▼                  ▼                  │                 │
│  ┌──────────────────────────────────────────────────────┐     │
│  │         Central Processing Unit (CPU)                 │     │
│  └──────────────────────────────────────────────────────┘     │
│      ▲            ▲                  ▲                          │
│      │     ┌──────────────┐   ┌──────────────┐                 │
│      │     │ Control Unit │   │ Input Unit   │                 │
│      │     └──────────────┘   └──────────────┘                 │
│                    ▲                  ▲                         │
└──────────────────────────────────────────────────────────────┘
     140          150                 160

                          100
```

## FIG. 1

FIG. 2

**Training Documents** 295

Basic Expression List Construction Unit 220

Collocation List Construction Unit 240

255

Training Document Full Feature Vector Construction Unit

Discriminant Function Construction Unit 270

270

257

Basic Expression List Storage Unit 225

Collocation List Storage Unit

Vector Compression Submatrix Construction

Discriminant Function Storage Unit 275

Document Input Unit

Basic Expression Ratio Calculation Unit

Input Document Full Feature Vector Construction Unit

Input Document Feature Vector Compression Unit

Input Document Classification Unit

Classification Output Unit

210    230    250    260    280    290

EP 1 650 680 B1

```
        ┌──────────┐
        │  Begin   │
        └────┬─────┘
             │
             ▼                        ___ 10
        ┌──────────────┐          ⤶
        │Input Document│◄─────────
        └──────┬───────┘
               │
               ▼                      ___ 20
     ┌──────────────────┐        ⤶
     │ Calculation of basic │◄───────
     │  expressions ratio   │
     └──────────┬──────────┘
                │
                ▼                     ___ 30
     ┌──────────────────┐       ⤶
     │ Calculation of input │◄──────
     │document feature vector│
     └──────────┬──────────┘
                │
                ▼                     ___ 40
     ┌──────────────────┐       ⤶
     │ Compression of input │◄──────
     │document feature vector│
     └──────────┬──────────┘
                │
                ▼                     ___ 50
    ┌────────────────────────┐   ⤶
    │Classification of input document│◄─
    │  by a discriminant function    │
    └───────────┬───────────────┘
                │
                ▼                     ___ 60
     ┌──────────────────┐       ⤶
     │ Output of classified │◄──────
     │     document         │
     └──────────┬──────────┘
                │
                ▼
          ┌─────────┐
          │   End   │
          └─────────┘
```

# FIG. 3

15

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2004299229 A
- JP 2003157271 A
- JP 2003271616 A

### Non-patent literature cited in the description

- **Inui ; Matsumoto.** Acquiring lexical knowledge for event desirability analysis. *roceedings of the 10th Annual Meeting of the Association for Natural Language Processing,* 2004, 91-94
- **Yuji Ide ; Hidetoshi Nagai ; Teigo Nakamura ; Hirosato Nomura.** Information Extraction with Single Item Template from Newspaper Articles. *Information Processing Society of Japan,* 1997, vol. 97 (109
- **Makoto Fujiyoshi ; Yuji Ide ; Hidetoshi Nagai ; Teigo Nakamura ; Hirosato Nomura.** Creation of Templates for Information Extraction Processing. *Proceedings from the 1996 Kyushu Joint Conference of Electrical and Electronics Engineers,* 1996, vol. 1332, 694
- **Aronow ; Soderland ; Feng.** *Automated Classification of Encounter Notes In A Computer Based Medical Record,* 1994
- **Kantor ; Lee ; Ng ; Zhao.** Application of Logical Analysis of Data to the TREC6 Routing Task. *Text {REtrieval} Conference Proceedings,* 1996, 611-617
- Using latent semantic analysis to improve information retrieval. **Dumais, S. T. ; Furnas, G. W. ; Landauer, T.K. ; Deerwester, S.** In CHI'88: Conference on Human Factors in Computing. ACM, 1988, 281-285
- Thumbs Up or Thumbs Down? Semantic Orientation Applied to Unsupervised Classification of Reviews. **P.D. Turney.** Proceeding of the 40th Annual Meeting of the Association for Computational Linguistics. 2002, 417-424
- **Lawson A D.** *Automatic entity extraction and activity detection for aerospace communications,* 3098-3109
- **Kushal Dave et al.** *Mining the peanut gallery: opinion extraction and semantic classification of product reviews,* 24 May 2003, 519-528